# EUROPEAN PATENT SPECIFICATION

(11) **EP 1 851 815 B1**
(45) Date of publication and mention of the grant of the patent: **14.12.2011**
(21) Application number: 06700946.4
(22) Date of filing: 25.01.2006
(51) Int. Cl.: H01M 4/88

(54) **METHOD OF PRODUCING A FUEL CELL CATHODE**
HERSTELLUNGSVERFAHREN EINER BRENNSTOFFZELLEN-KATHODE
PROCEDE DE FABRICATION D'UNE CATHODE DE PILE A COMBUSTIBLE

(30) Priority: 25.01.2005 GB 0501590
(43) Date of publication of application: 07.11.2007
(73) Proprietor: Ceres Intellectual Property Company Limited, Sussex RH13 5PX (GB)
(72) Inventor: LEWIS, Gene, Crawley, West Sussex RH10 1SS (GB); KILNER, John, Crawley, West Sussex RH10 1SS (GB); MCCOLM, Tom, Crawley, West Sussex RH10 1SS (GB)
(74) Representative: Oxley, Robin John George
(86) International application number: PCT/GB2006/000246
(87) International publication number: WO 2006/079800

(56) References cited:
- US-A1- 2002 081 762
- US-A1- 2004 021 240
- US-A1- 2004 104 519
- SAHIBZADA M ET AL: "Pd-promoted La0.6Sr0.4Co0.2Fe0.8O3 cathodes" SOLID STATE IONICS, NORTH HOLLAND PUB. COMPANY. AMSTERDAM, NL, vol. 113-115, 1 December 1998 (1998-12-01), pages 285-290, XP004153308 ISSN: 0167-2738

## Description

The present invention relates to a method of producing fuel cell cathodes.

Solid oxide fuel cell cathodes based on LSCF (an example of which is La_{0.6}Sr_{0.4}Co_{0.2}Fe_{0.8}O₃) are common in the field. This material exhibits the necessary mixed electronic and ionic conductivity and chemical stability for functioning as an SOFC cathode at typical operating temperatures.

Conventional processing of LSCF based cathode systems in general involves the fabrication of a single green ceramic layer by an established ceramic processing route. Such routes include tape casting, screen-printing, doctor blading and electrophoretic deposition. The green processed layer is subsequently sintered in air at a temperature in the range 900-1000 °C in order to retain a high porosity.

Examples of these prior-art processes for preparing LSCF cathodes include screen printing and firing in air at 950 °C for 2 hours (S.P. Jiang, A comparison of O2 reduction reactions on porous (La,Sr)MnO3 and (La,Sr)(Co,Fe)O3 electrodes - Solid State Ionics 146 (2002) 1-22), LSCF sol screen printing and heating in air at 900 °C for 4 hours (J. Liu, A. Co, S. Paulson, V. Birss, Oxygen reduction at sol-gel derived La0.8Sr0.2Co0.8Fe0.2O3 cathodes - Solid State Ionics, available online 03 Jan 2006), wet dropping LSCF sol-precursor as the working electrode and heating in air at 900 °C for 4 hours (Liu *et al.* 2006, *supra*), spin casting LSCF slurry and sintering in air at temperature ranges from 900 - 1250 °C for 0.2 - 4 hours (E. Murray, M. Sever, S. Barnett, Electrochemical performance of (La,Sr)(Co,Fe)O3-(Ce,Gd)O3 composite cathodes - Solid State Ionics 148 (2002) 27-34), and electrostatic spray assisted vapour deposition (ESAVD) technique for thin film LSCF heating at 300 - 400 °C followed by brushing on LSCF tape cast slurry and drying in air at 1000 °C for 12 minutes (J-M Bae, B. Steele, Properties of La0.6Sr0.4Co0.2Fe0.8O3-δ (LSCF) double layer cathodes on gadolinium-doped cerium oxide (CGO) electrolytes - Solid State Ionics 106 (1998) 247-253).

Notably, conventional LSCF cathode processing requires that the sintering step is carried out in air. Conventional wisdom to date supports the view that the firing of LSCF cathodes in reducing (low oxygen partial pressure) atmospheres cannot be satisfactorily executed because extensive aggressive reduction of the LSCF by hydrogen is suspected to induce a partial phase change in the cathode. This breakdown from a single phase is detrimental to both cathode function and structure and is generally deemed unacceptable for subsequent cathode and fuel cell performance.

In summary, conventional LSCF processing involves the firing of a green LSCF layer in air between 900 °C and 1000 °C. For the majority of current SOFC designs this processing route does not present any serious problems. For these all-ceramic (anode or electrolyte supported) fuel cell systems, which possess YSZ electrolytes, neither the cathode sintering atmosphere nor the cathode sintering temperature are detrimental to cell integrity. For all such systems, the electrolyte is fired in air at 1400° C or above and if the anode is nickel-based (generally a Ni/YSZ cermet), the anode is left in its fully oxidised state throughout the entirety of cell fabrication, and the nickel oxide is not reduced down to metallic nickel until the first operating cycle of the cell. Cells of this type are typically operated in the 700-900 °C temperature range.

For a metal supported SOFC that operates below 700° C (as described in e.g. GB 2368450), which possesses a Ni/CGO cermet anode in the reduced state and a CGO electrolyte fired in the region of 1000 °C, conventional cathode firing under air poses a threat to the maintenance of cell integrity during cell processing. The principal source of potential problems is anode re-oxidation and the associated volume changes during cathode firing in air, which can result in catastrophic electrolyte failure due to cracking and/or delaminating and/or rupture. Secondary to this problem, because of the supporting steel substrate, issues concerning extensive steel oxidation and volatile steel species migration also arise when processing at high temperatures (such as processing temperatures above 1000 °C). In addition to the stated problems with maintaining cell integrity during cathode firing, a further consideration exists. Due to the significant electronic conductivity of CGO at temperatures above 650 °C the cell design as described in GB 2368450 requires a cathode to function acceptably in the lower temperature range of 500-600 °C.

Whilst these problems do not prevent the operation of the fuel cells, it is desirable to improve and simplify component manufacture and to improve fuel cell performance. Other prior art includes US 2004/0021240, US 2004/0104519 and US 2002/0081762.

The present invention aims to overcome the prior art disadvantages and to provide an improved cathode fabrication route and cathodes fabricated by same.

According to a first aspect of the present invention there is provided a method of producing a fuel cell cathode, the method comprising the steps of:
(i) providing a primary layer comprising LSCF on a dense electrolyte layer;
(ii) isostatically pressing said primary layer in the pressure range 10-300 MPa;
(iii) providing on said primary layer a current collecting layer comprising a perovskite-based electrode, to define a bi-layer cathode; and
(iv) firing said bi-layer cathode in a reducing atmosphere.

Preferably, the primary layer is provided on a dense CGO electrolyte.

Preferably, the primary layer on the electrolyte is provided on an anode, more preferably a porous anode, more preferably still a Ni-CGO porous anode.

The anode is preferably provided on a substrate, more preferably a porous substrate, more preferably still a porous ferritic stainless steel substrate.

In certain embodiments, the perovskite-based electrode comprises LSCF. Thus, the primary layer and the current collecting layer can both comprise LSCF.

Particular examples of primary layers are those comprising an LSCF/CGO composite.

In certain embodiments, the primary layer has a thickness of 0.5-20 µm, more particularly 1-10 µm, more particularly 1.5-5 µm.

In certain embodiments, the isostatic pressing is cold isostatic pressing.

In various embodiments, the isostatic pressing is performed at a pressure of 10-300 MPa, more particularly 20-100 MPa, more particularly 30-70 MPa.

In various embodiments, the current collecting layer has a thickness of 5-100 µm, more particularly 10-70 µm, more particularly 30-50 µm.

In certain embodiments, the step of firing the bi-layer cathode is performed at a temperature of 700-900 °C, more particularly at 800-900 °C.

In certain embodiments, the bi-layer cathode is fired in the pO₂ range of 10⁻¹⁰ - 10⁻²⁰.

In certain embodiments, the bi-layer cathode is fired under a dilute, buffered H₂/H₂O atmosphere.

In certain embodiments, bi-layer cathode is re-oxidised after being fired in said reducing atmosphere, particularly at a temperature of 700 °C.

An example of a way in which the methods of the present invention can be used to make the fuel cell cathodes includes the following "Process 1" in which the following steps are performed:
(i) An LSCF/CGO composite 'active' layer (i.e. primary layer) is laid down by e.g. spray deposition or screen-printing;
(ii) Cold isostatic pressing of the 'active' (i.e. primary) layer is then performed. In the field of SOFC processing, to isostatically press an electrode when considering microstructure is counter-intuitive. A general theme running through electrode processing is a desire to create and preserve porosity due to mass transport and gas access considerations. Cold Isostatic Pressing (CIP) is a technique normally associated with the removal of porosity to create a denser product. In this case, CIP is employed in order to improve the contact between electrolyte and cathode to enable a firing temperature below typical LSCF cathode firing temperatures. Results revealed that the improvement in performance gained by pressing, and hence improved cathode- electrode contact, significantly outweighed any degradation due to loss of cathode porosity;
(iii) An LSCF current collecting layer is applied by e.g. spray deposition or screen printing, creating a green bi-layer cathode;
(iv) The green bi-layer cathode is fired under a dilute, buffered H₂O/H₂ atmosphere in the pO₂ range 10⁻¹⁰-10⁻²⁰. As discussed above, for LSCF based cathode systems, conventional wisdom is of the view that low pO₂ firing is not possible due to extensive chemical decomposition and subsequent cathode failure. Due to anode re-oxidation concerns, the use of low pO₂ cathode firing during processing was explored by the inventors, and the results were not as would be expected from the priori art, and instead were highly positive;
(v) Re-oxidation of the cathode. The decomposition of the isostatically pressed LSCF structure in the low pO₂ cathode firing atmosphere followed by re-oxidation, resulted in a cathode with a structure which outperformed conventional LSCF cathodes. The reduction of the pressed structure followed by re-oxidation induced a proportion, structure and scale of porosity which significantly increased cathode triple-phase boundary length and hence cathode performance.

Although the exact structural and physical nature of the cathodes thus produced are not fully understood at present, the results achieved are a notable improvement over the prior art. Without wishing to be limited or bound by speculation, it is believed that a factor contributing to the lower temperature performance enhancement lies in the reduction of the cathode 'active' layer during cathode firing. The reaction produces a highly porous microstructure with porosity believed to be on the nano-scale. This microstructure possesses a vastly increased active surface area close to the electrolyte surface, and this increased specific surface area manifests itself as greatly reduced area specific resistance (ASR).

In other embodiments, the bi-layer cathode is fired under a dilute air Argon or air Nitrogen atmosphere.

In such embodiments, the bi-layer cathode can be fired in the pO₂ range of 10⁻¹-10⁻¹⁰, for example in the pO₂ range of 10⁻¹-10⁻⁵.

The re-oxidisation step described for Process 1 need not be performed in such embodiments.

An example of a way in which the methods of the present invention can be used to make the fuel cell cathodes includes the following "Process 2" in which the following steps are performed:
(i) As per Process 1;
(ii) As per Process 1;
(iii) As per Process 1;
(iv) The green bi-layer cathode is fired under a dilute air in diluent gas (such a diluent gas being Argon or Nitrogen) environment in the pO₂ range 10⁻¹-10⁻¹⁰. The additional advantage of this processing step as compared to step (iv) of Process 1 is that is occurs in a more oxidising environment, resulting in a greater number of ion vacancies in the cathode lattice, greater cathode conductivity, lower ASR and thus greater cell operating performance. In addition, it removes the need for a re-oxidation step (as in Process 1 step (v)), as this can occur when the fuel cell is first used without any degrading or structural risks associated with re-oxidation from a more reduced state.

Thus, there is no requirement for Process 1 step (v).

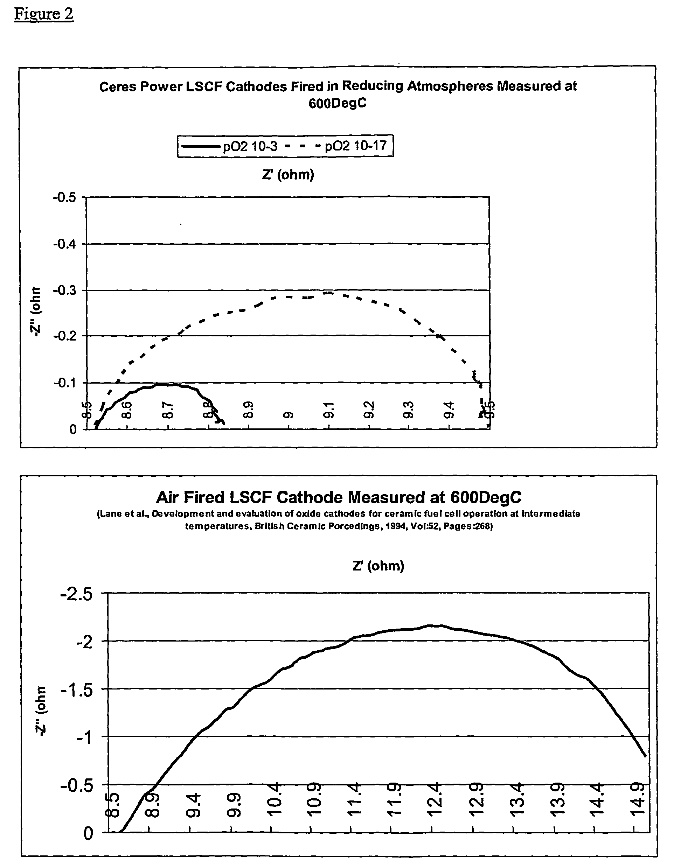

The method of the present invention produces a functional, bi-layer cathode possessing a unique and beneficial structure having a microporous structure in the current collector and active (i.e. primary) layers capable of performing well in the 500-600 °C operating temperature range. Cathodes processed by this route exhibited exceptional performance as shown in Figure 2, and when used with the metal supported IT-SOFC fuel cell of GB 2368450 they maintained their integrity throughout processing and subsequent fuel cell operation.

Notable advantages over the prior art achieved by the present invention include:
(i) Previously unreported excellent cathode performance in the operating temperature range 500-600 °C;
(ii) The preservation of metallic cell components and hence electrolyte integrity throughout cathode processing; and
(iii) The creation of a micro-porous cathode layer in direct contact with the electrolyte surface which significantly reduces ASR.

According to the method of the present invention, there is provided a bi-layer fuel cell cathode comprising first and second layers, said first layer comprising LSCF, said second layer comprising a perovskite-based electrode, one of said first and second layers being isostatically pressed.

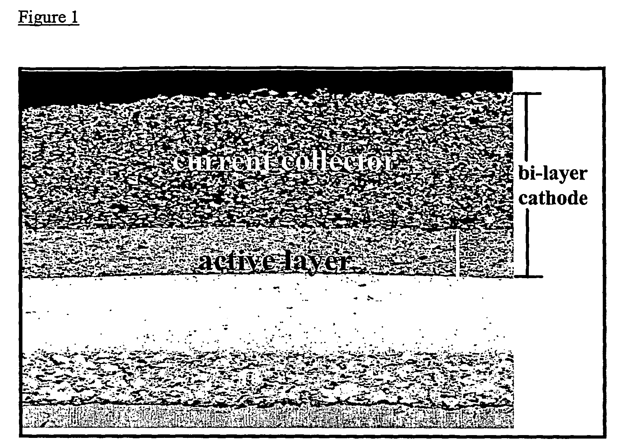

Such bi-layer fuel cell cathodes have a novel microstructure, an example of which is shown in Figure 1 and which, as detailed above, enables previously unreported and unexpectedly high performance in the 500-600 °C temperature range.

In particular, the bi-layer fuel cell cathode can be made according to the method of the present invention. Also provided according to the present invention is a fuel cell incorporating a cathode according to the present invention.

The invention will be further apparent from the following description with reference to the several figures of the accompanying drawings which show, by way of example only, methods of manufacture of bi-layer fuel cell cathodes, and bi-layer fuel cell cathodes made according to same. Of the Figures:
- Figure 1: shows a cross-sectional scanning electron microscope (SEM) image of a substrate-supported fuel cell comprising a bi-layer cathode structure, a dense electrolyte, a porous anode structure and a metal substrate. The top layer of the bi-layer cathode structure is the current collector, and the layer underneath is the primary layer;
- Figure 2: shows (bottom) a Cole-Cole plot of a conventional air fired LSCF cathode measured at 600° C, showing a relatively high ASR; and (top) Cole-Cole plots of two LSCF cathodes made according to the present invention - one (dashed line) fired in pO₂ of 10⁻¹⁷ and one (solid line) fired in pO₂ of 10⁻³, both measured at 600° C, showing significantly lower ASR values. X-axes show Z' (ohm). Y-axes show Z" (ohm); and

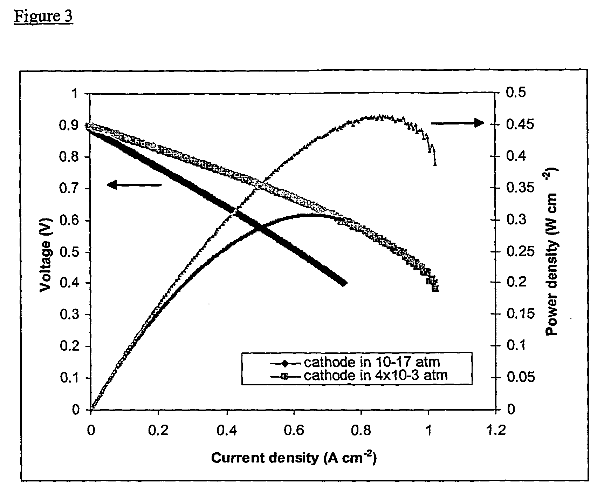

- Figure 3: shows the differing power densities obtained using a fuel cell of GB 2368450 made with an LSCF cathode sintered at a pO₂ of 10⁻¹⁷ atm as per Process A (below) and for a LSCF cathode sintered at a pO₂ of 10⁻³ atm as per Process B (below). Data was obtained at 600 °C in wet 97% H₂ and flowing air. X-axis shows current density (A cm⁻²); Y-axes show (left, for curves originating at (0,0.9)) voltage (V), and (right, for curves originating at (0,0)) power density (W cm⁻²). Upper curve originating at (0,0.9) shows cathode at a pO₂ of 4x10⁻³ atm; lower curve originating at (0,0.9) shows cathode at a pO₂ of 10⁻¹⁷ atm; upper curve originating at (0,0) shows cathode at a pO₂ of 4x10⁻³ atm; lower curve originating at (0,0) shows cathode at a pO₂ of 10⁻¹⁷ atm.

A symmetrical LSCF electrode half-cell on a CGO support was prepared by Process 1 and another by Process 2 (above).

Following the Process 1 route, the following process (Process A) was performed. Firstly, an active LSCF layer of 5µm was screen-printed on a CGO electrolyte, and cold isostatic pressing to 50MPa performed. A 35µm current collector layer of LSCF was screen-printed on to define a bi-layer cathode, and the cathode assembly was fired in a H₂O/H₂ reducing atmosphere of 10⁻¹⁷ at 900° C for 1 hour. The cathode was subsequently heated in air at 700° C for 30 minutes prior to being used and measurement taking place.

Following the Process 2 route, involving firing in a slightly reducing atmosphere, the following process (Process B) was performed. Firstly, an active LSCF layer of 5µm was screen-printed on a CGO electrolyte, and cold isostatic pressing to 50MPa performed. A 35µm current collector layer of LSCF was then screen-printed on to define a bi-layer cathode, and the cathode assembly was fired in Ar/air reducing atmosphere of 10⁻³ at 900° C for 1 hour. No subsequent cathode conditioning in air was required.

Cole-Cole plots generated from the measurements of the cathodes (Figure 2, top) show the effect of these processing routes over a standard air fired LSCF cathode (Figure 2, bottom) (taken from measurements at 600° C for a La_{0.6}Ca_{0.4}Fe_{0.8}Co_{0.2}O₃ cathode on Ce_{0.9}Sm_{0.1}O_{2-δ} electrolyte - Kilner JA, Lane JA, Fox H, Development and evaluation of oxide cathodes for ceramic fuel cell operation at intermediate temperatures, British Ceramic Proceedings, 1994, Vol: 52, Page: 268). The reducing atmosphere firing Z' measurements have been normalised to 8.52 ohm to provide consistency in presentation on the x-axis. This normalisation is required as the absolute values of the measurements depend on the substrate type, but the impedance response (and the resulting measurement changes) are only down to the electrode and are not affected by the substrate itself.

The results show ASR values of over 3 Ω/cm² for the air fired cathode, less than 0.5 Ω/cm² for the higher reducing firing and less than 0.15 Ω/cm² for the slightly reducing atmosphere, thus showing the advantages of being able to fire LSCF cathodes in a partially reducing atmosphere.

Similar levels of ASR improvement have been produced on actual CGO electrolyte IT-SOFC fuel cells operating at 550-600° C. Figure 3 shows the results, with a maximum power density of 0.465 W/cm² from the second cathode process compared to 0.32 W/cm² from the first cathode process.

The structure of the cathodes obtained using Process A is shown in Figure 1. From top to bottom, the first (black) layer is air; the second layer is current collector; the third layer is the active (i.e. primary) layer; the second and third layers together define the bi-layer cathode; the fourth layer is the dense CGO electrolyte; the fifth layer is the Ni-CGO anode; and the sixth (bottom) layer is the ferritic stainless steel substrate.

It will be appreciated that it is not intended to limit the present invention to the above examples only, many variants being readily apparent to a person of ordinary skill in the art without departing from the scope of the appended claims.

## Claims

1. A method of producing a fuel cell cathode, the method comprising the steps of:
(i) providing a primary layer comprising LSCF on a dense electrolyte layer;
(ii) isostatically pressing said primary layer in the pressure range 10-300 MPa;
(iii) providing on said primary layer a current collecting layer comprising a perovskite-based electrode, to define a bi-layer cathode; and
(iv) firing said bi-layer cathode in a reducing atmosphere.

2. A method according to claim 1, wherein said perovskite-based electrode comprises LSCF.

3. A method according to claim 1 or 2, said primary layer comprising an LSCF/CGO composite.

4. A method according to any of the preceding claims, said primary layer having a thickness of 0.5-20 µm.

5. A method according to claim 4, said primary layer having a thickness of 1-10 µm.

6. A method according to claim 5, said primary layer having a thickness of 1.5-5 µm.

7. A method according to any of the preceding claims, said isostatic pressing being cold isostatic pressing.

8. A method according to any of the preceding claims, said isostatic pressing being performed at a pressure of 10-300MPa.

9. A method according to claim 8, said isostatic pressing being performed at a pressure of 20-100 MPa.

10. A method according to claim 9, said isostatic pressing being performed at a pressure of 30-70 MPa.

11. A method according to any of the preceding claims, said current collecting layer having a thickness of 5-100 µm.

12. A method according to claim 11, said current collecting layer having a thickness of 10-70 µm.

13. A method according to claim 12, said current collecting layer having a thickness of 30-50 µm.

14. A method according to any of the preceding claims, wherein said bi-layer cathode is fired at a temperature of 700-900 °C.

15. A method according to claim 14, wherein said bi-layer cathode is fired at a temperature of 800-900 °C.

16. A method according to any of the preceding claims, wherein said bi-layer cathode is fired in the pO₂ range of 10⁻¹⁰-10⁻²⁰.

17. A method according to claim 16, wherein said bi-layer cathode is fired under a dilute, buffered H₂/H₂O atmosphere.

18. A method according to any of the preceding claims, wherein said bi-layer cathode is re-oxidised after being fired in said reducing atmosphere.

19. A method according to claim 18, wherein said bi-layer cathode is re-oxidised at a temperature of 700 °C.

20. A method according to any of claims 1-15, wherein said bi-layer cathode is fired under a dilute air Argon or air Nitrogen atmosphere.

21. A method according to claim 20, wherein said bi-layer cathode is fired in the pO₂ range of 10⁻¹-10⁻¹⁰.

22. A method according to claim 21, wherein said bi-layer cathode is fired in the pO₂ range of 10⁻¹-10⁻⁵.

23. A method according to any of the preceding claims, wherein each of said layers is deposited by spray deposition or screen-printing.

## Patentansprüche

1. Verfahren zur Herstellung einer Brennstoffzellenkathode, wobei das Verfahren die folgenden Schritte aufweist:
(i) Bereitstellen einer Primärschicht mit Lanthan-Strontium-Cobalt-Ferrit (LSCF) auf einer dichten Elektrolytschicht;
(ii) Isostatisches Pressen der Primärschicht im Druckbereich von 10-300 MPa;
(iii) Bereitstellen einer Stromabnehmerschicht mit einer Elektrode auf Perowskit-Basis auf der Primärschicht, um eine zweischichtige Kathode zu definieren; und
(iv) Brennen der zweischichtigen Kathode in einer reduzierenden Atmosphäre.

2. Verfahren nach Anspruch 1, wobei die Elektrode auf Perowskit-Basis LSCF aufweist.

3. Verfahren nach Anspruch 1 oder 2, wobei die Primärschicht einen LSCF/CGO-Verbundstoff (CGO = Cer-Gadoliniumoxid) aufweist.

4. Verfahren nach einem der vorstehenden Ansprüche, wobei die Primärschicht eine Dicke von 0,5-20 µm aufweist.

5. Verfahren nach Anspruch 4, wobei die Primärschicht eine Dicke von 1-10 µm aufweist.

6. Verfahren nach Anspruch 5, wobei die Primärschicht eine Dicke von 1,5-5 µm aufweist.

7. Verfahren nach einem der vorstehenden Ansprüche, wobei das isostatische Pressen isostatisches Kaltpressen ist.

8. Verfahren nach einem der vorstehenden Ansprüche, wobei das isostatische Pressen bei einem Druck von 10-300 MPa durchgeführt wird.

9. Verfahren nach Anspruch 8, wobei das isostatische Pressen bei einem Druck von 20-100 MPa durchgeführt wird.

10. Verfahren nach Anspruch 9, wobei das isostatische Pressen bei einem Druck von 30-70 MPa durchgeführt wird.

11. Verfahren nach einem der vorstehenden Ansprüche, wobei die Stromabnehmerschicht eine Dicke von 5-100 µm aufweist.

12. Verfahren nach Anspruch 11, wobei die Stromabnehmerschicht eine Dicke von 10-70 µm aufweist.

13. Verfahren nach Anspruch 12, wobei die Stromabnehmerschicht eine Dicke von 30-50 µm aufweist.

14. Verfahren nach einem der vorstehenden Ansprüche, wobei die zweischichtige Kathode bei einer Temperatur von 700-900°C gebrannt wird.

15. Verfahren nach Anspruch 14, wobei die zweischichtige Kathode bei einer Temperatur von 800-900°C gebrannt wird.

16. Verfahren nach einem der vorstehenden Ansprüche, wobei die zweischichtige Kathode im pO₂-Bereich von 10⁻¹⁰-10⁻²⁰ gebrannt wird.

17. Verfahren nach Anspruch 16, wobei die zweischichtige Kathode unter einer verdünnten, gepufferten H₂/H₂O-Atmosphäre gebrannt wird.

18. Verfahren nach einem der vorstehenden Ansprüche, wobei die zweischichtige Kathode nach dem Brennen in der reduzierenden Atmosphäre reoxidiert wird.

19. Verfahren nach Anspruch 18, wobei die zweischichtige Kathode bei einer Temperatur von 700°C reoxidiert wird.

20. Verfahren nach einem der Ansprüche 1-15, wobei die zweischichtige Kathode unter einer verdünnten Luft-Argon- oder Luft-Stickstoff-Atmosphäre gebrannt wird.

21. Verfahren nach Anspruch 20, wobei die zweischichtige Kathode im pO₂-Bereich von 10-¹-10⁻¹⁰ gebrannt wird.

22. Verfahren nach Anspruch 21, wobei die zweischichtige Kathode im pO₂-Bereich von 10⁻¹-10⁻⁵ gebrannt wird.

23. Verfahren nach einem der vorstehenden Ansprüche, wobei jede der Schichten durch Aufsprühen oder Siebdruck aufgebracht wird.

## Revendications

1. Procédé de production d'une cathode de pile à combustible, ledit procédé comprenant les étapes consistant à:
(i) disposer une couche primaire comprenant du LSCF sur une couche d'électrolyte dense;
(ii) effectuer une compression isostatique sur ladite couche primaire dans la gamme de pression de 10 à 300 MPa;
(iii) disposer sur ladite couche primaire une couche collectrice de courant comprenant une électrode à base de perovskite, pour définir une cathode bicouche; et
(iv) cuire ladite cathode bicouche dans une atmosphère réductrice.

2. Procédé selon la revendication 1, dans lequel ladite électrode à base de perovskite comprend du LSCF.

3. Procédé selon la revendication 1 ou 2, ladite couche primaire comprenant un composite LSCF/CGO.

4. Procédé selon l'une quelconque des revendications précédentes, ladite couche primaire ayant une épaisseur de 0,5-20 µm.

5. Procédé selon la revendication 4, ladite couche primaire ayant une épaisseur de 1-10 µm.

6. Procédé selon la revendication 5, ladite couche primaire ayant une épaisseur de 1,5-5 µm.

7. Procédé selon l'une quelconque des revendications précédentes, ladite compression isostatique étant une compression isostatique à froid.

8. Procédé selon l'une quelconque des revendications précédentes, ladite compression isostatique étant effectuée à une pression de 10-300 MPa.

9. Procédé selon la revendication 8, ladite compression isostatique étant effectuée à une pression de 20-100 MPa.

10. Procédé selon la revendication 9, ladite compression isostatique étant effectuée à une pression de 30-70 MPa.

11. Procédé selon l'une quelconque des revendications précédentes, ladite couche collectrice de courant ayant une épaisseur de 5-100 µm.

12. Procédé selon la revendication 11, ladite couche collectrice de courant ayant une épaisseur de 10-70 µm.

13. Procédé selon la revendication 12, ladite couche collectrice de courant ayant une épaisseur de 30-50 µm.

14. Procédé selon l'une quelconque des revendications précédentes, dans lequel ladite cathode bicouche est cuite à une température de 700-900°C.

15. Procédé selon la revendication 14, dans lequel ladite cathode bicouche est cuite à une température de 800-900°C.

16. Procédé selon l'une quelconque des revendications précédentes, dans lequel ladite cathode bicouche est cuite dans la gamme de pO₂ de 10⁻¹⁰-10⁻²⁰.

17. Procédé selon la revendication 16, dans lequel ladite cathode bicouche est cuite dans une atmosphère de H₂/H₂O dilué, tamponné.

18. Procédé selon l'une quelconque des revendications précédentes, dans lequel ladite cathode bicouche est réoxydée après avoir été cuite dans ladite atmosphère réductrice.

19. Procédé selon la revendication 18, dans lequel ladite cathode bicouche est réoxydée à une température de 700°C.

20. Procédé selon l'une quelconque des revendications 1 à 15, dans lequel ladite cathode bicouche est cuite dans une atmosphère d'air dilué/azote ou d'air dilué/argon.

21. Procédé selon la revendication 20, dans lequel ladite cathode bicouche est cuite dans la gamme de pO₂ de 10⁻¹-10⁻¹⁰.

22. Procédé selon la revendication 21, dans lequel ladite cathode bicouche est cuite dans la gamme de pO₂ de 10⁻¹-10⁻⁵.

23. Procédé selon l'une quelconque des revendications précédentes, dans lequel chacune desdites couches est déposée par un procédé de dépôt par pulvérisation ou par sérigraphie.
